(19) Europäisches Patentamt European Patent Office Office européen des brevets

(11) EP 2 367 856 B1

(12) **EUROPEAN PATENT SPECIFICATION**

(45) Date of publication and mention of the grant of the patent:
**30.03.2016 Bulletin 2016/13**

(51) Int Cl.:
*C08F 10/02* (2006.01)     *C08F 4/02* (2006.01)
*C08F 4/69* (2006.01)     *B65D 1/16* (2006.01)

(21) Application number: **09765028.7**

(22) Date of filing: **01.12.2009**

(86) International application number:
**PCT/EP2009/008544**

(87) International publication number:
**WO 2010/063443 (10.06.2010 Gazette 2010/23)**

(54) **POLYETHYLENE FOR THE PRODUCTION OF TIGHT HEAD DRUMS**

POLYETHYLEN ZUR HERSTELLUNG VON SPUNDFÄSSERN

POLYÉTHYLÈNE POUR LA FABRICATION DE FÛTS AVEC COUVERCLE HERMÉTIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.12.2008 EP 08021045**

(43) Date of publication of application:
**28.09.2011 Bulletin 2011/39**

(73) Proprietor: **Saudi Basic Industries Corporation Riyadh 11422 (SA)**

(72) Inventors:
• **NOOIJEN, Godefridus Arnoldus Henricus**
  **6160 GA Geleen (NL)**
• **MARTENS, Johannes Peter Antonius**
  **6160 GA Geleen (NL)**
• **REIJNTJENS, Ron**
  **6160 GA Geleen (NL)**
• **GROENEBOOM, Robert Harm**
  **6160 GA Geleen (NL)**

(74) Representative: **Sabic Intellectual Property Group Sabic Intellectual Property Department P.O. Box 3008 6160 GA Geleen (NL)**

(56) References cited:
**WO-A-2005/054315     JP-A- 2006 182 917**

• **KURELEC L ET AL: "Strain hardening modulus as a measure of environmental stress crack resistance of high density polyethylene" POLYMER ELSEVIER LTD GB, vol. 46, no. 17, 28 July 2005 (2005-07-28) , pages 6369-6379, XP002527237 cited in the application**

**Description**

The present invention relates to polyethylene suitable for the production of tight head drums.

The production processes of the polyethylenes LDPE, HDPE and LLDPE are summarised in "Handbook of Polyethylene" by Andrew Peacock (2000; Dekker; ISBN 0824795466) at pages 43-66. The applied catalysts can be divided in three different subclasses including Ziegler Natta catalysts, Phillips catalysts and single site catalysts.

EP1204523B and WO2005054315A1 disclose the production of containers by blow moulding of a polymer material for example high density polyethylene (HDPE).In the production of containers using polymer materials, a variety of moulding techniques may be used, in particular blow moulding, injection moulding and rotational moulding. For medium to large sized containers between for example 1 and 1000 litres volume blow moulding is commonly used and for very large containers, for example for use as oil or water tanks, rotational moulding can also be used. Generally in the blow moulding of containers a heated parison or extrudate is expanded to contact the interior surface of a mould by the action of pressurized gas within the parison and/or by application of a partial vacuum within the mould, for example by use of a mould having within its surface gas outlet vents through which a partial vacuum may be applied. For blow moulding to be successful, the heated polymer must be able to stretch smoothly to produce a satisfactorily uniform skin in contact with the mould surface. In the production of containers larger than 5 litres and intended for the use of dangerous goods by blow moulding generally a high molecular weight HDPE with a melt flow rate ($MFR_{21}$) in the range up to 12 g/10 min. may be applied. The choice of such materials essentially represents a compromise between the properties of the polymer, in particular the processability properties required for the blow moulding to be performed efficiently and successfully and the mechanical and chemical properties required for the end uses of the blow moulded containers such as for example impact resistance, stiffness and environmental stress crack resistance (ESCR).

HDPE is used to manufacture different types of industrial transit packaging such as large industrial open head drums, tight head drums, jerry cans, fuel tanks and intermediate bulk containers (IBC). The different types of storage and transit containers require different types of HDPE as the basic polymer because each type of industrial storage container requires an unique balance of impact resistance and ESCR properties and good processability properties.

In the development and the selection of the polymer there is typically a trade off between characteristics such as resistance to slow crack growth (measured for instance by ESCR), stiffness (measured for example by density) impact resistance (measured for example by Izod), chemical resistance and processability or more specifically ease of extrusion (measured for example by melt index). Typically the higher the molecular weight of polyethylene the higher the impact resistance and ESCR. However, increasing the molecular weight will decrease processability and make extrusion more difficult.

The end user and the governmental regulations require that the container meet certain minimum requirements, such as for example for impact resistance, top load, ESCR, chemical resistance, food approval and UN approval. Furthermore the producer of the containers expects ease of processability and material consistency. Depending on the end use, there may be even more specific requirements of the material. For instance, in the case of large drums manufactured by blow molding, high melt strength is generally desired, as the parison produced in the blow molding process typically must maintain its integrity for longer periods of time as the object made gets larger. Each blow moulding application requires specific properties of the HDPE grades. For example, for food packaging organoleptical properties are important whereas environmental stress crack resistance and stiffness are important for detergent and cleaner applications. Industrial containers require sufficient chemical resistance and impact strength, especially when the containers are filled with products classified as dangerous goods under the UN recommendations which recognise several types of packaging that can be used for the transport of dangerous goods:

- Packages up to 400 kg or 450 l such as for example jerry-cans, fuel tanks and drums such as for example tight head drums,
- Composite packages, inner and outer package fitting together such as for example bag-in-box,
- IBC's up to 3m³ such as for example flexible IBC, full plastic, composite steel outer cage with plastic inner receptacle and
- Large packaging from 400 kg or 450 l up to 3m³ such as for example pallet-box.

Tight head or closed head drums have only two small, bottle-style openings on top, and are designed to carry liquids. These drums may be obtained by a blow moulding process. The closure system can use venting plugs and/or injection moulded sealing caps, and is both air and watertight. L-ring drums are the most common format. These are extrusion blow-moulded in one operation. The most common sizes are in the 200 to 220 litre range with a body weight of 8 to 10 kg. The drum comprises two compression moulded L-shaped rings top and bottom which provide the strength of a steel drum, for mechanical lifting. A tight head drum is disclosed for example in US 3972450.

The focus for polymer development within the tight head market is to obtain higher stiffness for light weighting, improved processability and improved balance in impact and ESCR properties.

It is the object of the present invention to provide a high density polyethylene grade to be used in the production of tight head drums having an excellent balanced combination of processability, stiffness/ impact properties, ESCR properties and surface/welding quality while maintaining the other desired properties.

The ethylene polymer according to the present invention is a pelletized HDPE having:

- a density > 954 kg/m$^3$ and $\leq$ 959 kg/m$^3$ ( according to ISO1183)
- a high-load melt index (HLMI) $\geq$ 1.7 g/10 min and $\leq$ 10 g/10 min ( according to ISO 1133;190 °C;21.6 kg)
- an Izod impact strength (-30°C) $\geq$ 40 KJ/m$^2$ and $\leq$ 90 KJ/m$^2$ (according to ISO 180/A) and
- $M_w$ / $M_n$ $\geq$ 8 and $\leq$ 17 (according to size exclusion chromatography (SEC) measurement).

The strain hardening modulus of the pelletized HDPE is $\geq$ 10 and $\leq$ 25 (according to the method as described in Elsevier, Polymer 46(2005) 6369-6379)

Said testing methods are described in the Examples.

Pelletized HDPE according to the invention results in tight head drums having an excellent combination of stiffness/rigidity, ESCR, impact, processing properties and surface quality.

A further advantage is the combination of properties and the reduction of system costs such as for example down gauging and cycle time reduction in the production of the tight head drums.

Preferably the density $\geq$ 955 and $\leq$ 959 kg/m$^3$.

Preferably HLMI $\geq$ 1.9 and $\leq$ 5 g/10 min.

Preferably the Izod impact strength (-30°C) $\geq$ 45 KJ/m$^2$. Preferably the strain hardening modulus $\geq$ 14 MPa.

Preferably $M_w$ / $M_n$ $\geq$ 9 and $\leq$ 16.

Preferably the die swell at 1600 s$^{-1}$ $\leq$ 4 (according to ISO 11443).

It is an advantage of the present invention that the pelletized high density polyethylene grades produced in a single reactor process with silica supported chromium containing catalysts used in the production of tight head drums provide an excellent balanced combination of processability, stiffness, impact properties, ESCR properties and surface/welding quality.

Pelletized polymers are obtained after the extrusion step whereas reactor powder is the product obtained as powder from the reactor. The pelletized HDPE is advantageous over HDPE reactor powder. The current commercial HDPE materials, which do fulfil market requirements regarding impact and ESCR and are used in this tight head drum market are reactor powders with a HLMI of about 2.0 g/10 min. and are produced in single reactor processes with silica supported chromium containing catalysts. However, during processing of these reactor powders into drums, the melt viscosity increases significantly (HLMI drops to 1.7- 1.8 g/10 min.) due to the well known melt index drop during extrusion, so processing of these powders becomes more difficult. In contrast, if a pelletized HDPE material with a similar HLMI of 2.2 g/10 min. (according to the present invention) is processed into a drum, the melt viscosity decreases (i.e. HLMI increases to about 2.5 g/10 min.) and processing into drums goes much better. One can of course improve the processability of reactor powder grades by increasing the HLMI of the starting material, but then mechanical properties like impact and ESCR will decrease. Another practical disadvantage of the reactor powder over the pelletized product is the reduced extruder output; the use of the pelletized product makes it possible to apply 100% virgin material.

Pelletized HDPE is much more beneficial in safety, health and environmental aspects compared to the HDPE reactor powders during the blow moulding process.

Furthermore pelletized HDPE has excellent homogeneous distribution of additives as for example stabilisers as compared to the HDPE reactor powder.

Pelletized HDPE produced with so-called Ziegler-Natta catalysts in two or more polymerization reactors in series are also used in this market and these products do not have the disadvantage in processability like the reactor powders described above. However, a process with two or more polymerization reactors in series is much more complicated and requires higher investment costs. The single reactor process thus has a clear cost advantage compared to processes with two or more polymerization reactors in series.

Preferably, the polymerization process for the preparation of the ethylene copolymers according to the invention takes place by polymerizing ethylene in the presence of a silica-supported chromium and fluor containing catalyst and an alkyl containing promoter wherein the silica supported chromium containing catalyst does not comprise boron.

According to a preferred embodiment the polymerization takes place by polymerizing ethylene and at least one olefin comonomer having between three and ten carbon atoms per molecule. More preferably the comonomer has between six and ten carbon atoms per molecule.

The preferred comonomer is 1-hexene.

According to a preferred embodiment the polymerization process takes place in the presence of a chromium-containing catalyst.

Generally the chromium-containing catalyst contains a support. Preferably the support is a silica support. Suitable silica supports can be produced by different processes. The most commonly used silica supports are powders with irregular shaped granular particles, which can be used as support for the chromium-containing catalyst in the process according to the present invention.

Other silica supports are produced by spray-drying techniques which result in spherically shaped particles. These so-called spray dried silica supports may also be used as silica support for the chromium-containing catalyst in the process according to the present invention.

Other spherical shaped silica particles are directly formed in the first step of the silica production process. These so-called micro-spherical silica supports may also be used as silica support for the chromium-containing catalyst as applied in the process according to the present invention.

The silica may have a surface area (SA) larger than 200 $m^2/g$ and a pore volume (PV) larger than 0.8 $cm^3/g$.

The support may be modified so as to include cogels such as for example silica-titania or silica-alumina and by the replacement of silica by alumina or amorphous aluminium phosphates. Furthermore, the support may comprise a tergel which is produced by mixing a chromium source with the silica and titania compound.

The chromium-containing catalyst may also be doped with chemical compounds containing for example aluminium, titanium, phosphorus, or fluor for example by impregnation of the porous chromium-containing supports with solutions of such compounds. The chemical compounds containing for example aluminium, titanium, phosphorus, or fluor can also be supplied to the silica support together with the chromium containing compound.

Preferably, the silica-supported chromium-containing catalyst is an unmodified silica-supported chromium catalyst having a pore volume smaller than 1.5 $cm^3$/g and the specific surface area is at least 350 $m^2$/gram.

The silica-supported chromium catalyst is a silica-supported chromium-containing catalyst that also contains fluor.

The properties of the catalyst, pore volume and specific surface area are determined before the catalyst is activated at an elevated temperature.

Generally the amount of chromium in the catalyst is at least 0.5 % by weight.

Preferably the amount of chromium in the catalyst is at least 1.0 wt%.

Generally the amount of fluor in the catalyst is at least 1.0 % by weight.

Preferably, the amount of fluor in the catalyst is at least 1.5 % by weight.

According to a preferred embodiment of the invention the average particle size ($D_{50}$) of the catalyst is between 25 and 150 micrometers.

Generally, the catalyst is activated before being applied in the polymerization reaction. The activation may take place under different conditions. The activation generally takes place at an elevated temperature, for example, at a temperature above 450°C. The activation may take place in different atmospheres, for example in dry air.

According to a preferred embodiment the activation takes place at least partially under an inert atmosphere preferably consisting of nitrogen. At the same time the temperature is raised slowly. It has been found to be advantageous to change from the nitrogen atmosphere to an atmosphere of dry air at a temperature of at most 700°C. The activation time after reaching the maximum temperature may last for several minutes to several hours. Preferably this activation time is at least 1 hour but it may be advantageous to activate much longer.

Preferably, the alkyl containing promoter is an alkyl boron compound.

More preferably, the alkyl boron compound is triethyl boron.

If triethyl boron is used as a promoter, generally the boron concentration in the polymerization reactor is less than 0.25 ppm of boron based on the diluent.

Preferably, the concentration is less than 0.15 ppm of boron and more preferably the concentration is less than 0.10 ppm boron.

According to a preferred embodiment of the invention the concentration is less than 0.05 ppm boron

Preferably, the polymerization of ethylene takes place in a diluent at a temperature of between 90°C and 110°C.

Suitable diluents include for example isobutane and propane.

The polymerisation takes place in a single reactor.

The polymerization may be performed via a gas-phase process or via a slurry process.

According to a preferred embodiment of the invention the reactor is a slurry loop reactor.

In the case that the polymerization takes place without addition of a comonomer there will still be small amounts of comonomer present in the reactor because for example 1-hexene is known to be produced in situ under the present process conditions. Consequently also without addition of comonomer, the produced polymer may contain small amounts of comonomer units and can thus be considered to be a copolymer or a terpolymer.

According to a preferred embodiment of the invention the ethylene copolymer according to the invention is obtained by polymerizing ethylene and optionally 1-hexene in a slurry loop reactor in the presence of a chromium and fluor containing catalyst on a silica support and an alkyl boron compound.

According to a further preferred embodiment of the invention the ethylene copolymer according to the invention is obtained by polymerising ethylene and 1-hexene in a slurry loop reactor in the presence of a silica-supported chromium and fluor containing catalyst and triethyl boron wherein the silica-supported chromium-containing catalyst is a silica-supported chromium catalyst having a pore volume smaller than 1.5 cm$^3$/g and the specific surface area is at least 350 m$^2$/gram and the amount of chromium in the catalyst is at least 0.5 % by weight and the amount of fluor in the catalyst is at least 1.0 % by weight and wherein the boron concentration is less than 0.25 ppm of boron based on the diluent.

The ethylene copolymers according to the invention may be combined with additives such as for example lubricants, fillers, stabilizers, antioxidants, compatibilizers and pigments. The additives used to stabilize the copolymers may be, for example, additive packages including hindered phenols, phosphites, antistatics and stearates.

An anti static agent can be used to suppress fouling of the reactor wall. Suitable anti static agents are for example disclosed in US4182810 and EP-A-107127. Other suitable anti static agents include for example STATSAFE™ from Innospec Active Chemicals.

JP-A-2006182917 discloses an organoboron treated fluorinated chromium polymerization catalyst produced by bringing an organoboron compound into contact with a fluorinated chromium catalyst. This organoboron treated fluorinated chromium polymerization catalyst is applied as catalyst during the polymerisation of ethylene. The catalyst applied in the present invention is different because the silica-supported chromium catalyst does not comprise boron. In the process according to the present invention a boron compound is added to the polymerisation reactor which also contains the silica-supported chromium catalyst whereas JP-A-2006182917 teaches to use a boron comprising catalyst which means that an extra reaction step is necessary in the production of this catalyst and this reaction step is environmentally dangerous because of the large scale handling of Cr$^{6+}$ containing catalyst. Furthermore JP-A-2006182917 does not disclose tight head drums and a specific polyethylene grade having the specific characteristics required in the production of the specific technical field of tight head drums. The polymers as disclosed in Table 1 of JP-A-2006182917 are unsuitable to be applied in the production of tight head drums because the density is lower than 946 kg/m$^3$, $M_w$ / $M_n$ is higher than 17.8 and the value for the impact makes the obtained product unsuitable to be applied in the tight head drum applications. JP-A-2006182917 does not disclose and does not give any indication for a pelletized ethylene polymer having as specific features a density > 954 kg/m$^3$ and ≤ 959 kg/m$^3$, a high-load melt index (HLMI) ≥ 1.7 g/10 min and ≤ 10 g/10 min, an Izod impact strength(-30°C) ≥ 40 KJ/m$^2$ and ≤ 90 KJ/m$^2$, a strain hardening modulus ≥ 10 and ≤ 25 MPa and $M_w$ / $M_n$ ≥ 8 and ≤ 17 to be suitable to be used in tight head drum applications.

The invention will be elucidated by means of the following nonlimiting examples.

Examples I-III and Comparative Examples A-B

The characteristics of polyethylene obtained in the examples were determined as follows:

- The high-load melt index (HLMI) of polyethylene was measured according to ISO 1133 on pellets at 190°C with a test weight of 21.6 kg
- The density of polyethylene was measured according to ISO 1183 (with additional annealing step) (30 minutes boiling and cooling in water).
- The strain hardening modulus is a measure of environmental stress crack resistance of high density polyethylene. The strain hardening modulus of polyethylene was measured by the method as described by Kurelec et al.in Elsevier, Polymer 46 (2005) p. 6369-6379. ESCR measurements by testing specimen in a non-ionic surfactant environment at elevated temperatures until failure is a test method which is accepted by the blow moulding market for decades. Main disadvantages of this method are the long time before failures occurs and the relative high deviation in reproducibility. A more elegant test method which overcomes these disadvantages is the ESCR method according to a standard tensile test in which the strain hardening modulus is calculated from the true-stress true-strain (TS-TS) curve. The strain hardening modulus is an intrinsic material property in which no surfactant is needed for accelerated failure times. It has been proven by L.Kurelec et al in said article that the strain hardening modulus perfectly correlates with the ESCR data as obtained by the surfactant environment method. In Table 2 (p. 6375) the ESCR and strain hardening modulus (< Gp>) data of some Cr HDPE grades and bimodal HDPE grades (both with $C_4$ and $C_6$ as co-monomers) are collected and plotted against each other (Figure 10, p. 6377). It shows a very well correlation (Rsquare=0.90) in a strain hardening modulus range between 10 and 35 MPa. The test method as described can easily be carried out by any person skilled in the art. The sample preparation and the measurements are described in Chapters 2.3.1.and 2.3.2.of this article. The observed correlation (Figure 10) is based on tensile measurements at T=80°C. The strain hardening modulus < Gp> can be calculated as given in Chapter 2.3.3. (data treatment) of the article.
- The impact properties were measured at -30 °C according to Izod (ISO 180 type A) on bars, cutted out of pressed plates
- The polydispersity of polyethylene is defined as $M_w/M_n$. $M_w$ and $M_n$ were determined by size exclusion chromatography (SEC) measurement. See pages 242-244 of "Handbook of Polyethylene, structure, properties and applications "(by Andrew Peacock, Dekker, New York, 2000)
- The die swell of polyethylene was measured according to ISO 11443. The measurements were performed at a rate

of 1600 s [-1]. Each measurement was repeated six times. For die swell calculations the following formulae was used:

Swell ratio is defined as follows:

$$SR = \frac{\left(\dfrac{\sum D_{extrudate}}{n}\right)}{D_{capillary}}$$

wherein

$SR$ = swell ratio
$D_{extrudate}$ = diameter of extrudate right below the die streng [mm]
$D_{capillary}$ = diameter of capillary [1.00 mm]
n = number of experiments

The die swell is further calculated using the formula: Die swell = $(SR)^2 - 1$

Example I

Ethylene and 1-hexene were copolymerized in a continuously operated 5 L liquid-filled CSTR reactor in isobutane at 4.6 MPa in the presence of a chromium catalyst supported on a granular silica having a pore volume of 1.25 $cm^3$/g , a $D_{50}$ of 50 micrometers and a surface area of 460 $m^2$/g. The catalyst contained 1.1 wt% of chromium and 1.8 wt% of fluor.
This catalyst was activated in a fluid bed in dry air (water content less than 1 ppm) at 600°C for 5 hours. During the activation procedure nitrogen was used instead of air at temperatures lower than 320 °C.
Triethylboron (TEB) was used as a promoter.
Isobutane (2.81 kg/h), ethylene (1.26 kg/h), 1-hexene (2 g/h) and hydrogen (0.21 g/h) were continuously fed to the reactor at 102 °C. TEB was also continuously fed to the reactor in such an amount that concentration of boron in the isobutane was 0.08 ppm.
The catalyst feed to the reactor was controlled in order to maintain a constant ethylene concentration in the reactor of 10.1 mol%. Polyethylene production was 1.0 kg/h.
The catalyst activity was 3500 g of polyethylene per g of catalyst.
After stabilization, the polymer reactor powder was pelletized in a twin-screw extruder.
The polyethylene pellets had the following characteristics:

- density:         956.6 kg/$m^3$
- strain hardening modulus:       15.4 MPa
- high-load melt index:      2.2 g/10 min.
- impact Izod (-30°C):      61.1 KJ/m2
- die swell 1600 s[-1]:      2,72
- $M_w/M_n$ :      15.7

Example II

Ethylene was polymerized according to Example I except that no 1-hexene was dosed to the reactor. Under these conditions a small amount of 1-hexene was produced in situ which resulted in a 1-hexene concentration in the reactor of 0.003 mol%.
Isobutane (2.97 kg/h), ethylene (0.95 kg/h) and hydrogen (0.21 g/h) were continuously fed to the reactor at 102 °C. TEB was also continuously fed to the reactor in such an amount that concentration of boron in the isobutane was 0.08 ppm.
The catalyst feed to the reactor was controlled in order to maintain a constant ethylene concentration in the reactor of 9.6 mol%. Polyethylene production was 0.72 kg/h.
The catalyst activity was 3800 g of polyethylene per g of catalyst.
After stabilization, the polymer powder was pelletized in a twin-screw extruder. The polyethylene pellets had the following characteristics:

- density: 957.5 kg/m$^3$
- strain hardening modulus: 14.4 MPa
- high-load melt index: 2.2 g/10 min.
- impact Izod (-30°C): 61.3 KJ/m2
- die swell 1600 s$^{-1}$ 2.46
- $M_w/M_n$ : 14.3

Example III

Ethylene and 1-hexene were copolymerized in a continuously operated 5 L liquid-filled CSTR reactor in isobutane at 4.6 MPa in the presence of a chromium catalyst supported on a spray-dried silica having a pore volume of 1.24 cm$^3$/g and a surface area of 440 m$^2$/g. The catalyst contained 1.11 wt% of chromium and 1.72 wt% of fluor.
This catalyst was activated in a fluid bed in dry air (water content less than 1 ppm) at 600°C for 5 hours. During the activation procedure nitrogen was used instead of air at temperatures lower than 320°C.
Triethylboron (TEB) was used as a promoter.
Isobutane (2.85 kg/h), ethylene (1.27 kg/h), 1-hexene (1.5 g/h) and hydrogen (0.22 g/h) were continuously fed to the reactor at 100°C. TEB was also continuously fed to the reactor in such an amount that concentration of boron in the isobutane was 0.027 ppm.
The catalyst feed to the reactor was controlled in order to maintain a constant ethylene concentration in the reactor of 9.65 mol%. Polyethylene production was 1.0 kg/h.
The catalyst activity was 2060 g of polyethylene per g of catalyst.
After stabilization, the polymer reactor powder was pelletized in a twin-screw extruder.
The polyethylene pellets had the following characteristics:

- density: 955.7 kg/m$^3$
- strain hardening modulus: 17.1 MPa
- high-load melt index: 2.11 g/10 min.
- impact Izod (-30°C): 66.2 KJ/m2
- die swell 1600 s$^{-1}$: 2.2
- $M_w/M_n$ : 11.7

In Table 1 the polyethylenes according to Examples I-III are compared with Lupolen 5261 ZHI of BASELL (Comparative Example A) and HDPE 56020 S of TOTAL Petrochemicals (Comparative Example B) .The comparative HDPE grades are commercially applied during the production of tight head drums. The examples show that the pelletized products according to Examples I-III have an improved combination of properties consisting of higher density (stiffness and stackability), a better processability (higher HLMI) and a better impact/ESCR balance than the reactor powders of the Comparative Examples A-B. The properties are excellent for the use of these polymers in the technical field of tight head drum applications.

Table 1

| | Example I | Example II | Example III | Comparative Example A | Comparative Example B |
|---|---|---|---|---|---|
| Physical form | Pellets | Pellets | Pellets | Reactor powder | Reactor powder |
| Density (kg/m$^3$) | 956.6 | 957.5 | 955.7 | 954 | 952 |
| HLMI (g/10 min.) | 2.2 | 2.2 | 2.1 | 2.0 | 2.1 |
| HLMI after blow moulding step (g/10 min.) | >2.2 | >2.2 | >2.1 | 1.8 | <2.1 |
| Impact-30°C (kJ/m$^2$) | 61.1 | 61.3 | 66.2 | 62 | 60 |
| Strain hardening modulus (MPa) | 15.4 | 14.4 | 17.1 | 17 | 15 |
| Mw/Mn | 15.7 | 14.3 | 11.7 | 11.4 | 12.0 |

**Claims**

1. A pelletized ethylene polymer having

- a density > 954 kg/m$^3$ and $\leq$ 959 kg/m$^3$ ( according to ISO 1183)
- a high-load melt index $\geq$ 1.7 g/10 min and $\leq$ 10 g/10 min (according to ISO 1133;190°C;21.6 kg))
- an Izod impact strength (-30°C) $\geq$ 40 KJ/m$^2$ and $\leq$ 90 KJ/m$^2$ (according to ISO 180/A) and
- $M_w$ / $M_n$ $\geq$ 8 and $\leq$ 17 (according to size exclusion chromatography).

2. An ethylene polymer according to Claim 1 **characterised in that** the density $\geq$ 955 kg/m$^3$.

3. An ethylene polymer according to any one of Claims 1-2 **characterised in that** the high-load melt index $\geq$ 1.9 g/10 min and $\leq$ 5 g/10 min.

4. An ethylene polymer according to any one of Claims 1-3 **characterised in that** the Izod impact strength (-30°C) $\geq$ 45 KJ/m$^2$.

5. An ethylene polymer according to any one of Claims 1-4 **characterised in that** the strain hardening modulus $\geq$ 10 and $\leq$ 25 (according to the method as described in Elsevier, Polymer 46(2005) 6369-6379).

6. An ethylene polymer according to any one of Claims 1-5 **characterised in that** $M_w/M_n$ $\geq$ 9 and is $\leq$ 16.

7. An ethylene polymer according to any one of Claims 1-6 **characterised in that** the die swell at 1600 s$^{-1}$ is $\leq$ 4 (according to ISO 11443).

8. A polymerization process for the preparation of an ethylene polymer according to any one of Claims 1-7 **characterised in that** the polymerization takes place by polymerizing ethylene in the presence of a silica-supported chromium and fluor containing catalyst and an alkyl containing promoter wherein the silica-supported chromium catalyst does not comprise boron.

9. A polymerization process according to Claim 8 **characterised in that** the polymerization takes place by polymerizing ethylene and at least one olefin comonomer having between three and ten carbon atoms per molecule.

10. A polymerization process according to Claim 9 **characterised in that** the comonomer is 1-hexene.

11. A polymerization process according to any one of Claims 8-10 **characterised in that** the alkyl containing promoter is an alkyl boron compound.

12. A polymerization according to Claim 11 **characterised in that** the alkyl boron compound is triethyl boron.

13. A polymerization process according to any one of Claims 8-12 **characterised in that** the polymerization takes place in a slurry loop reactor.

14. A polymerization process according to any one of Claims 8-13 **characterised in that** the polymerization takes place by polymerizing ethylene and 1-hexene in a slurry loop reactor in the presence of a silica-supported chromium and fluor containing catalyst and triethyl boron wherein the silica-supported chromium-containing catalyst is a silica-supported chromium catalyst having a pore volume smaller than 1.5 cm$^3$ /g and a specific surface area of at least 350 m$^2$/gram, wherein the amount of chromium in the catalyst is at least 0.5 % by weight and the amount of fluor in the catalyst is at least 1.0 % by weight and wherein the boron concentration is less than 0.25 ppm of boron based on the diluent.

15. A tight head drum produced with an ethylene polymer according to any one of Claims 1-7 or a tight head drum produced with an ethylene polymer obtained with the process according to any one of Claims 8-14.

**Patentansprüche**

1. Granuliertes Ethylenpolymer mit

- einer Dichte > 954 kg/m$^3$ und $\leq$ 959 kg/m$^3$ (gemäß ISO 1183),
- einem Hochlast-Schmelzindex $\geq$ 1,7 g/10 min und $\leq$ 10 g/10 min (gemäß ISO 1133; 190°C; 21,6 kg),
- einer Izod-Schlagzähigkeit (-30°C) $\geq$ 40 kJ/m$^2$ und $\leq$ 90 kJ/m$^2$ (gemäß ISO 180/A) und
- $M_w/M_n \geq 8$ und $\leq$ 17 (gemäß Größenausschlusschromatographie).

2. Ethylenpolymer nach Anspruch 1, **dadurch gekennzeichnet, dass** die Dichte $\geq$ 955 kg/m$^3$.

3. Ethylenpolymer nach einem der Ansprüche 1-2, **dadurch gekennzeichnet, dass** der Hochlast-Schmelzindex $\geq$ 1,9 g/10 min und $\leq$ 5 g/10 min.

4. Ethylenpolymer nach einem der Ansprüche 1-3, **dadurch gekennzeichnet, dass** die Izod-Schlagzähigkeit (-30°C) $\geq$ 45 kJ/m$^2$.

5. Ethylenpolymer nach einem der Ansprüche 1-4, **dadurch gekennzeichnet, dass** der Verfestigungsmodul $\geq$ 10 und $\leq$ 25 (gemäß der in Elsevier, Polymer 46 (2005) 6369-6379, beschriebenen Methode).

6. Ethylenpolymer nach einem der Ansprüche 1-5, **dadurch gekennzeichnet, dass** $M_w/M_n \geq 9$ und $\leq$ 16 ist.

7. Ethylenpolymer nach einem der Ansprüche 1-6, **dadurch gekennzeichnet, dass** die Strangaufweitung bei 1600 s$^{-1}$ $\leq$ 4 (gemäß ISO 11443) ist.

8. Polymerisationsverfahren zur Herstellung eines Ethylenpolymers nach einem der Ansprüche 1-7, **dadurch gekennzeichnet, dass** die Polymerisation durch Polymerisieren von Ethylen in Gegenwart eines siliciumdioxidgeträgerten Chrom und Fluor enthaltenden Katalysators und eines alkylgruppenhaltigen Promotors erfolgt, wobei der siliciumdioxidgeträgerte Chromkatalysator kein Bor umfasst.

9. Polymerisationsverfahren nach Anspruch 8, **dadurch gekennzeichnet, dass** die Polymerisation durch Polymerisieren von Ethylen und mindestens einem Olefincomonomer mit zwischen drei und zehn Kohlenstoffatomen pro Molekül erfolgt.

10. Polymerisationsverfahren nach Anspruch 9, **dadurch gekennzeichnet, dass** es sich bei dem Comonomer um 1-Hexen handelt.

11. Polymerisationsverfahren nach einem der Ansprüche 8-10, **dadurch gekennzeichnet, dass** es sich bei dem alkylgruppenhaltigen Promotor um eine Alkylborverbindung handelt.

12. Polymerisationsverfahren nach Anspruch 11, **dadurch gekennzeichnet, dass** es sich bei der Alkylborverbindung um Triethylbor handelt.

13. Polymerisationsverfahren nach einem der Ansprüche 8-12, **dadurch gekennzeichnet, dass** die Polymerisation in einem Suspensionsschlaufenreaktor erfolgt.

14. Polymerisationsverfahren nach einem der Ansprüche 8-13, **dadurch gekennzeichnet, dass** die Polymerisation durch Polymerisieren von Ethylen und 1-Hexen in einem Suspensionsschlaufenreaktor in Gegenwart von einem siliciumdioxidgeträgerten Chrom und Fluor enthaltenden Katalysator und Triethylbor erfolgt, wobei es sich bei dem siliciumdioxidgeträgerten chromhaltigen Katalysator um einen siliciumdioxidgeträgerten Chromkatalysator mit einem Porenvolumen von weniger als 1,5 cm$^3$/g und einer spezifischen Oberfläche von mindestens 350 m$^2$/Gramm handelt, wobei die Chrommenge in dem Katalysator mindestens 0,5 Gew.-% beträgt und die Fluormenge in dem Katalysator mindestens 1,0 Gew.-% beträgt und wobei die Borkonzentration weniger als 0,25 ppm, bezogen auf das Verdünnungsmittel, beträgt.

15. Spundfass, hergestellt mit einem Ethylenpolymer nach einem der Ansprüche 1-7, oder Spundfass, hergestellt mit einem nach dem Verfahren nach einem der Ansprüche 8-14 erhaltenen Ethylenpolymer.

**Revendications**

1. Polymère d'éthylène aggloméré en granulés, ayant :

• une densité > 954 kg/m$^3$ et $\leq$ 959 kg/m$^3$ (selon ISO 1183)
• un indice de fusion sous charge élevée $\geq$ 1,7 g/10 min et $\leq$ 10 g/10 min (selon ISO 1133 ; 190 °C, 21,6 kg)
• une valeur de résistance au choc Izod (-30 °C) $\geq$ 40 KJ/m$^2$ et $\leq$ 90 KJ/m$^2$ (selon ISO 180/A) et
• M$_w$/M$_n$ $\geq$ 8 et $\leq$ 17 (mesuré par chromatographie d'exclusion de tailles).

**2.** Polymère d'éthylène selon la revendication 1, **caractérisé en ce que** la densité est $\geq$ 955 kg/m$^3$.

**3.** Polymère d'éthylène selon l'une quelconque des revendications 1 ou 2, **caractérisé en ce que** l'indice de fusion sous charge élevée est $\geq$ 1,9 g/10 min et $\leq$ 5 g/10 min.

**4.** Polymère d'éthylène selon l'une quelconque des revendications 1 à 3, **caractérisé en ce que** la valeur de résistance au choc Izod (-30 °C) est $\geq$ 45 KJ/m$^2$.

**5.** Polymère d'éthylène selon l'une quelconque des revendications 1 à 4, **caractérisé en ce que** le module de déformation est $\geq$ 10 et $\leq$ 25 (selon la méthode décrite dans Elsevier, Polymer 46(2005) 6369-6379).

**6.** Polymère d'éthylène selon l'une quelconque des revendications 1 à 5, **caractérisé en ce que** M$_w$/M$_n$ $\geq$ 9 et $\leq$ 16.

**7.** Polymère d'éthylène selon l'une quelconque des revendications 1 à 6, **caractérisé en ce que** le gonflement au niveau de la filière à 1 600 s$^{-1}$ est $\leq$ 4 (selon ISO 11443).

**8.** Procédé de polymérisation pour la préparation d'un polymère d'éthylène selon l'une quelconque des revendications 1 à 7, **caractérisé en ce que** la polymérisation est réalisée par polymérisation d'éthylène en présence d'un catalyseur contenant du chrome et du fluor sur un support en silice et d'un promoteur contenant un alkyle, le catalyseur contenant du chrome sur un support en silice ne contenant pas de bore.

**9.** Procédé de polymérisation selon la revendication 8, **caractérisé en ce que** la polymérisation est réalisée par polymérisation d'éthylène et d'au moins un comonomère d'oléfine comportant entre 3 et 10 atomes de carbone par molécule.

**10.** Procédé de polymérisation selon la revendication 9, **caractérisé en ce que** le comonomère est le 1-hexène.

**11.** Procédé de polymérisation selon l'une quelconque des revendications 8 à 10, **caractérisé en ce que** le promoteur contenant un alkyle est un composé d'alkyle et de bore.

**12.** Polymérisation selon la revendication 11, **caractérisée en ce que** le composé d'alkyle et de bore est le triéthyl-bore.

**13.** Procédé de polymérisation selon l'une quelconque des revendications 8 à 12, **caractérisé en ce que** la polymérisation est réalisée dans un réacteur en boucle pour polymérisation en suspension.

**14.** Procédé de polymérisation selon l'une quelconque des revendications 8 à 13, **caractérisé en ce que** la polymérisation est réalisée par polymérisation d'éthylène et de 1-hexène dans un réacteur en boucle pour polymérisation en suspension en présence d'un catalyseur contenant du chrome et du fluor sur un support en silice et de triéthyl-bore, le catalyseur contenant du chrome sur un support en silice étant un catalyseur contenant du chrome sur un support en silice ayant un volume de pore inférieur à 1,5 cm$^3$/g et une surface spécifique d'au moins 350 m$^2$/gramme, la quantité de chrome dans le catalyseur étant d'au moins 0,5 % en poids et la quantité de fluor dans le catalyseur étant d'au moins 1,0 % en poids et la concentration de bore étant inférieure à 0,25 ppm de bore relativement au diluant.

**15.** Fût à ouverture partielle produit avec un polymère d'éthylène selon l'une quelconque des revendications 1 à 7 ou fût à ouverture partielle produit avec un polymère d'éthylène obtenu avec le procédé selon l'une quelconque des revendications 8 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1204523 B
- WO 2005054315 A1
- US 3972450 A
- US 4182810 A
- EP 107127 A
- JP 2006182917 A

### Non-patent literature cited in the description

- **ANDREW PEACOCK.** Handbook of Polyethylene. Dekker, 2000, 43-66
- Polymer. Elsevier, 2005, vol. 46, 6369-6379
- **KURELEC.** Polymer. Elsevier, 2005, vol. 46, 6369-6379
- structure, properties and applications. **ANDREW PEACOCK.** Handbook of Polyethylene. Dekker, 2000, 242-244